# EUROPÄISCHE PATENTSCHRIFT

(11) **EP 1 921 565 B1**
(45) Veröffentlichungstag und Bekanntmachung des Hinweises auf die Patenterteilung: **14.03.2012**
(21) Anmeldenummer: 07019992.2
(22) Anmeldetag: 12.10.2007
(51) Int. Cl.: G06K 7/10

(54) **Barcodelesegerät**
Bar code reader
Appareil de lecture d'un code à barres

(30) Priorität: 11.11.2006 DE 202006017268 U
(43) Veröffentlichungstag der Anmeldung: 14.05.2008
(73) Patentinhaber: Leuze electronic GmbH + Co. KG, 73277 Owen/Teck (DE)
(72) Erfinder: Claus, Armin, 72622 Nürtingen (DE); Droemer, Jörg, 72574 Bad Urach-Wittlingen (DE)
(74) Vertreter: Ruckh, Rainer Gerhard

(56) Entgegenhaltungen:
- JP-A- 4 195 271
- US-A- 5 864 128
- US-A1- 2005 199 725

## Beschreibung

Die Erfindung betrifft ein Barcodelesegerät.

Derartige Barcodelesegeräte dienen zur Detektion von Barcodes, die aus einer Folge von hellen und dunklen Linienelementen vorgegebener Breite bestehen. Das Barcodelesegerät umfasst einen Sender, welcher Sendelichtstrahlen, vorzugsweise Laserstrahlen, emittiert. Die Sendelichtstrahlen weisen einen mittleren Durchmesser entsprechend ihrer räumlichen Intensitätsverteilung senkrecht zur Ausbreitungsrichtung auf. Bei Laserstrahlen entspricht die räumliche Intensitätsverteilung idealerweise einer Gaußverteilung.

Der Durchmesser der Sendelichtstrahlen variiert mit dem Abstand zum Barcodelesegerät entsprechend der Ausgestaltung einer Sendeoptik, die dem Sender nachgeordnet ist. Die Sendeoptik besteht aus einer Linse. In der Brennebene der Sendelichtstrahlen ist der Durchmesser der Sendelichtstrahlen üblicherweise erheblich kleiner als die Breite der Linienelemente des Barcodes. Demzufolge ist die Amplitudenmodulation der Empfangssignale nahezu identisch mit den Breiten der Linienelemente des Barcodes, so dass diese von dem Barcodelesegerät sicher erkannt werden kann.

Mit zunehmender Entfernung des Barcodes von der Brennebene der Sendelichtstrahlen wird der Durchmesser der Sendelichtstrahlen rasch größer. Sobald der Durchmesser der Sendelichtstrahlen von gleicher Größenordnung wie die Breiten der Linienelemente der Barcodes ist, wird die Modulation des Empfangssignals durch die Breite des Sendelichtstrahls so beeinflusst, dass eine sichere Detektion des Barcodes erschwert wird oder nicht mehr möglich ist.

Somit können mit den Sendelichtstrahlen Barcodes nur dann sicher erfasst werden, wenn diese innerhalb eines eng begrenzten Lesebereichs, das heißt eines Leseabstands um die Brennebene angeordnet sind.

Aus der DE 44 11 023 C2 ist ein Barcodelesegerät bekannt, bei welchem zur Erweiterung des Lesebereichs die analogen Empfangssignale am Ausgang des Empfängers einem n-bit-Analog-Digitalwandler zugeführt werden. Die dadurch erhaltenen digitalisierten Empfangssignale werden in ein digitales Filter eingelesen. Die Übertragungscharakteristik des digitalen Filters ist so gewählt, dass sie innerhalb eines vorgegebenen Toleranzbereichs dem Inversen des Frequenzspektrums der räumlichen Intensitätsverteilung der Sendelichtstrahlen am Ort des zu detektierenden Barcodes entspricht. Zur Bestimmung der Übertragungscharakteristik werden die zeitabhängigen Koeffizienten des digitalen Filters in einem mehrere Iterationsschritte umfassenden Variationsverfahren berechnet.

Mit der auf diese Weise bestimmten Übertragungscharakteristik des digitalen Filters können Signalverzerrungen, welche durch den endlichen Durchmesser der Sendelichtstrahlen bei der Abtastung der Barcodes auftreten, weitgehend eliminiert werden. Dadurch kann der nutzbare Lesebereich des Barcodelesegeräts erheblich erweitert werden.

Nachteilig hierbei ist jedoch, dass zur Vergrößerung des Lesebereichs ein aufwendiges Auswerteverfahren nötig ist. Zwar braucht die Bestimmung der Koeffizienten des Filters lediglich vor Inbetriebnahme des Barcodelesegeräts durchgeführt werden. Jedoch ist zur Bestimmung der Koeffizienten ein erheblicher Aufwand an Rechenleistung notwendig. Zudem müssen die Randbedingungen für das Variationsverfahren sehr sorgfältig gewählt werden, damit für die Übertragungscharakteristik sinnvolle Ergebnisse erhalten werden. Dies bedingt zum einen erhöhten Aufwand und erfordert zum anderen ein erhöhtes Fachwissen bei der Festlegung der Übertragungscharakteristik des digitalen Filters.

In der WO 2004/051323 A1 ist eine Flüssigkeitslinse beschrieben, die eine Kammer aufweist, in der zwei verschiedene Flüssigkeiten einen Meniskus bilden. Durch Anlegen unterschiedlicher Spannungen an die Elektroden kann die Form und Richtung eines die Linse durchsetzenden Lichtstrahls geändert werden. Eine Verwendung der Linse zur Strahlablenkung in einem Barcode-Scanner ist angesprochen.

Aus der US 5 498 868 ist ein optischer Codeleser bekannt, der eine Ablenkeinheit zur Führung von Lichtstrahlen über zu detektierende Codes aufweist. Weiterhin ist als Sendeoptik eine Flüssigkeitslinse vorgesehen, deren Brennweite variierbar ist.

Der Erfindung liegt die Aufgabe zugrunde, ein Barcodelesegerät der eingangs genannten Art so auszubilden, dass dessen Funktionalität mit möglichst geringem baulichen Aufwand erweitert wird.

Zur Lösung dieser Aufgabe sind die Merkmale des Anspruchs 1 vorgesehen.

Das erfindungsgemäße Barcodelesegerät dient zur Detektion von Barcodes innerhalb eines Abtastbereichs und umfasst einen Sendelichtstrahlen emittierenden Sender, einen Empfangslichtstrahlen empfangenden Empfänger, eine Auswerteeinheit zur Auswertung der am Ausgang des Empfängers anstehenden Empfangssignale und eine Ablenkeinheit, mittels derer die Sendelichtstrahlen periodisch innerhalb des Abtastbereichs geführt sind. Dem Sender ist als Sendeoptik eine Flüssigkeitslinse zugeordnet, deren Brennweite durch Anlegen einer elektrischen Spannung variierbar ist. Hierdurch ist der Lesebereich, innerhalb dessen Barcodes detektierbar sind, einstellbar. Die Flüssigkeitslinse weist eine geschlossene Kapselung auf in welcher eine isolierende Flüssigkeit und eine leitende Flüssigkeit gelagert sind. Durch Anlegen einer Spannung an in den Seitenwänden der Kapselung gelagerten Elektroden ist die Krümmung der Grenzflächen zwischen den beiden, unterschiedliche Brechungsindizes aufweisenden, Flüssigkeiten veränderbar.

Ein wesentlicher Vorteil des erfindungsgemäßen Barcodelesegeräts besteht darin, dass die Fokuslage der Sendelichtstrahlen durch die Flüssigkeitslinse auf rein elektrischem Weg und damit ohne mechanische Stellvorrichtungen und insbesondere ohne bewegte Massen verändert werden kann. Die Einstellung der Fokuslage kann daher verschleißfrei, schnell und mit geringem Leistungsverbrauch durchgeführt werden.

Das Barcodelesegerät kann somit schnell und einfach an unterschiedliche Leseabstände, in denen sich zu detektierende Barcodes befinden, angepasst werden.

Erfindungsgemäß wird zur Erzielung eines großen nutzbaren Lesebereichs eine periodische, kontinuierliche Änderung der Fokuslage der Sendelichtstrahlen durch eine entsprechende Einstellung der Flüssigkeitslinse vorgenommen. Hierbei ist die Frequenz der Änderung der Fokuslage signifikant kleiner als die Abtastrate, mit welcher die Sendelichtstrahlen den Abtastbereich überstreichen. Dadurch ist gewährleistet, dass während einer Abtastperiode, innerhalb derer die Sendelichtstrahlen den Abtastbereich zur Detektion eines Barcodes überstreichen, die Fokuslage der Sendelichtstrahlen näherungsweise konstant ist.

Die Erfindung wird im Nachstehenden anhand der Zeichnungen erläutert. Es zeigen:
- Figur 1:: Schematische Darstellung eines Ausführungsbeispiels eines Bar- codelesegeräts.
- Figur 2a, b:: Schematische Darstellung einer die Sendeoptik des Barcodelesegeräts gemäß Figur 1 bildenden Flüssigkeitslinse für zwei unterschiedliche Ansteuerungen.

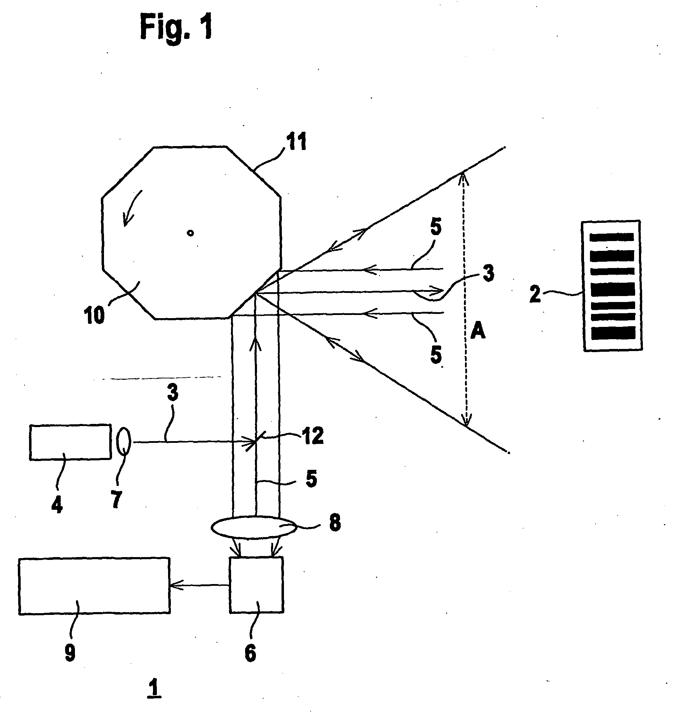

Figur 1 zeigt ein Ausführungsbeispiel eines Barcodelesegeräts 1 zum Erfassen von Barcodes 2 innerhalb eines Abtastbereichs A. Die Barcodes 2 bestehen aus einer Folge von schwarzen und weißen Linienelementen.

Das Barcodelesegerät 1 weist einen Sendelichtstrahlen 3 emittierenden Sender 4 und einen Empfangslichtstrahlen 5 empfangenden Empfänger 6 auf.

Der Sender 4 ist von einer Laserdiode gebildet, der Empfänger 6 besteht aus einer Fotodiode oder dergleichen.

Zur Strahlformung der Sendelichtstrahlen 3 ist dem Sender 4 eine Sendeoptik 7 nachgeordnet. Dem Empfänger 6 ist eine Empfangsoptik 8 vorgeordnet, mittels derer die Empfangslichtstrahlen 5 auf den Empfänger 6 fokussiert werden.

Der Empfänger 6 ist an eine Auswerteeinheit 9 angeschlossen. Die Auswerteeinheit 9 ist von einem Mikrocontroller oder dergleichen gebildet.

Zur Erfassung der Barcodes 2 werden die Sendelichtstrahlen 3 periodisch innerhalb des Abtastbereichs geführt. Hierzu ist eine Ablenkeinheit vorgesehen, über welche sowohl die Sendelichtstrahlen 3 als auch die Empfangslichtstrahlen 5 geführt sind.

Die Ablenkeinheit ist im vorliegenden Ausführungsbeispiel von einem motorisch getriebenen, rotierenden Polygonspiegelrad 10 gebildet. Das Polygonspiegelrad 10 weist mehrere identische Spiegelflächen 11 auf, wobei im vorliegenden Beispiel acht derartiger Spiegelflächen 11 vorgesehen sind.

Die Sende- 3 und Empfangslichtstrahlen 5 werden jeweils über dieselbe Spiegelfläche 11 des Polygonspiegelrads 10 geführt. Dabei verlaufen die Strahlachsen der auf das Polygonspiegelrad 10 auftreffenden Sendelichtstrahlen 3 und die am Polygonspiegelrad 10 reflektierten Empfangslichtstrahlen 5 koaxial zueinander. Die koaxiale Strahlführung der Sende- 3 und Empfangslichtstrahlen 5 in diesem Bereich wird beispielsweise mittels eines Strahlteilers 12, der wie in Figur 1 dargestellt die Sendelichtstrahlen 3 ablenkt, erreicht. Die Empfangslichtstrahlen 5, die am Polygonspiegelrad 10 reflektiert werden, werden am Strahlteiler 12 vorbei zum Empfänger 6 geführt.

Durch die Drehbewegung des Polygonspiegelrads 10 werden die Sendelichtstrahlen 3 periodisch innerhalb eines Winkelbereichs abgelenkt, welcher den Abtastbereich A bildet. Die Größe des Winkelbereichs ist durch die Anzahl der Spiegelflächen 11 des Polygonspiegelrads 10 vorgegeben.

Mit den Sendelichtstrahlen 3 wird ein im Abtastbereich A angeordneter Barcode 2 periodisch abgetastet. Die am Barcode 2 reflektierten Empfangslichtstrahlen 5 weisen entsprechend dem Muster der Linienelemente des Barcodes 2 eine Amplitudenmodulation auf. Dementsprechend weisen auch die Empfangssignale am Ausgang des Empfängers 6 anstehenden, durch die Empfangslichtstrahlen 5 generierten Empfangssignale eine entsprechende Amplitudenmodulation auf. Diese Amplitudenmodulation der Empfangssignale wird in der Auswerteeinheit 9 zur Dekodierung des jeweiligen Barcodes 2 ausgewertet.

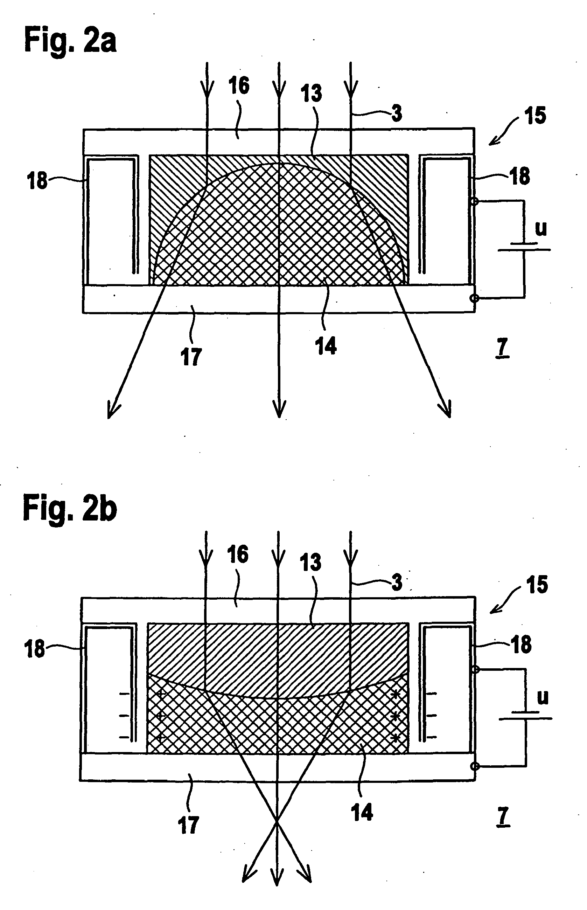

Die Sendeoptik 7 ist als Flüssigkeitslinse ausgebildet, deren Brennweite elektrisch verstellbar ist. Die Figuren 2a, b zeigen schematisch den Aufbau und die Funktionsweise der Flüssigkeitslinse. Die Flüssigkeitslinse weist eine isolierende Flüssigkeit 13 und leitende Flüssigkeit 14 auf, die in einer geschlossenen Kapselung 15 gelagert sind, deren Stirnseiten von Glasplatten 16, 17 gebildet sind, durch welche die Sendelichtstrahlen 3 geführt werden können. In den Seitenwänden der Kapselung 15 befinden sich Elektroden 18. Durch Anlegen einer vorgegebenen Spannung U kann die Krümmung der Grenzflächen zwischen den beiden, unterschiedliche Brechungsindizes aufweisenden Flüssigkeiten 13, 14 verändert werden und so die Brennweite der Flüssigkeitslinse wie in den Figuren 2a, b exemplarisch dargestellt, verändert werden.

Durch die elektrische Änderung der Brennweite der Flüssigkeitslinse wird die Fokuslage der Sendelichtstrahlen 3 und damit der Lesebereich des Barcodelesegeräts 1 geändert. Die Änderung des Lesebereichs des Barcodelesegeräts 1 kann kontinuierlich oder diskontinuierlich erfolgen.

Gemäß einer ersten Variante kann die Brennweite der Flüssigkeitslinse durch Einlesen eines Signals von einer externen Einheit geändert werden.

Gemäß einer zweiten Variante kann die Änderung der Brennweite der Flüssigkeitslinse in Abhängigkeit der Distanzen von Objekten, insbesondere in Abhängigkeit der jeweiligen Distanz des zur erfassenden Barcodes 2, geändert werden. Hierzu kann im Barcodelesegerät 1 ein separater Distanzsensor integriert sein. Alternativ können der Sender 4 und der Empfänger 6 des Barcodelesegeräts 1 selbst einen Distanzsensor bilden.

Gemäß einer erfindungsgemäßen Variante wird der Lesebereich kontinuierlich variiert, in dem die Brennweite innerhalb eines vorgegebenen Bereichs periodisch variiert wird. Zweckmäßigerweise und erfindungsgemäß ist die Frequenz der Brennweitenänderung erheblich geringer als die Abtastrate, mit welcher die Sendelichtstrahlen 3 den Abtastbereich überstreichen, so dass die Brennweite während einer Abtastperiode im Wesentlichen unverändert ist.

Bezugszeichenliste
- (1): Barcodelesegerät
- (2): Barcode
- (3): Sendelichtstrahlen
- (4): Sender
- (5): Empfangslichtstrahlen
- (6): Empfänger
- (7): Sendeoptik
- (8): Empfangsoptik
- (9): Auswerteeinheit
- (10): Polygonspiegelrad
- (11): Spiegelfläche
- (12): Strahlteiler
- (13): isolierende Flüssigkeit
- (14): leitende Flüssigkeit
- (15): Kapselung
- (16): Glasplatte
- (17): Glasplatte
- (18): Elektroden

## Patentansprüche

1. Barcodelesegerät zur Detektion von Barcodes innerhalb eines Abtastbereichs mit einem Sendelichtstrahlen emittierenden Sender, einem Empfangslichtstrahlen empfangenden Empfänger, einer Auswerteeinheit zur Auswertung der am Ausgang des Empfängers anstehenden Empfangssignale, und mit einer Ablenkeinheit, mittels derer die Sendelichtstrahlen periodisch innerhalb des Abtastbereichs geführt sind, wobei dem Sender (4) als Sendeoptik (7) eine Flüssigkeitslinse zugeordnet ist, deren Brennweite durch Anlegen einer elektrischen Spannung variierbar ist, wodurch der Lesebereich, innerhalb dessen Barcodes (2) detektierbar sind, einstellbar ist, wobei die Flüssigkeitslinse eine geschlossene Kapselung aufweist, in welcher eine isolierende Flüssigkeit (13) und eine leitende Flüssigkeit (14) gelagert sind, wobei durch Anlegen einer Spannung an in den Seitenwänden der Kapselung gelagerten Elektroden (18) die Krümmung der Grenzflächen zwischen den beiden, unterschiedliche Brechungsindizes aufweisenden Flüssigkeiten (13, 14) veränderbar ist, **dadurch gekennzeichnet, dass** zur Einstellung des Lesebereichs die Brennweite der Flüssigkeitslinse periodisch verändert wird, wobei die Frequenz der Änderung der Fokuslage signifikant kleiner ist als die Abtastrate, mit welcher die Sendelichtstrahlen dem Abtastbereich überstreichen.

## Claims

1. Barcode reader for detection of barcodes within a scanning region, comprising a transmitter emitting transmitted light beams, a receiver receiving received light beams, an evaluating unit for evaluation of the received signals present at the output of the receiver, and a deflecting unit by means of which the transmitted light beams are periodically guided within the scanning region, wherein associated with the transmitter (4) as transmission optical system (7) is a liquid lens having a focal width which is variable by application of an electrical voltage, whereby the reading range within which the barcode (2) is detectable can be set, wherein the liquid lens has a closed encapsulation in which an insulating liquid (13) and a conductive liquid (14) are stored, and wherein through application of a voltage to electrodes (18) mounted in the side walls of the encapsulation the curvature of the boundary surfaces between the two liquids (13, 14), which have different indices of refraction, is variable, **characterised in that** for setting the reading range the focal width of the liquid lens is periodically changed and wherein the frequency of the change of the focal position is significantly smaller than the scanning rate at which the transmitted light beams cover the scanning region.

## Revendications

1. Appareil de lecture de codes à barres permettant de détecter des codes à barres à l'intérieur d'une zone de balayage, comportant un émetteur émettant des rayons lumineux d'émission, un récepteur recevant des rayons lumineux de réception, une unité d'évaluation pour évaluer les signaux de réception présents à la sortie du récepteur, et une unité de déviation au moyen de laquelle les rayons lumineux d'émission sont guidés périodiquement à l'intérieur de la zone de balayage, une lentille liquide étant associée à l'émetteur (4) en tant qu'optique d'émission (7), dont il est possible de faire varier la distance focale en appliquant une tension électrique, ce qui permet de régler la zone de lecture à l'intérieur de laquelle des codes à barres (2) sont détectables, la lentille liquide présentant un encapsulage fermé dans lequel sont logés un liquide isolant (13) et un liquide conducteur (14), la courbure des surfaces limites entre les deux liquides (13, 14) qui présentent des indices de réfraction différents pouvant être modifiée par application d'une tension aux électrodes (18) logées dans les parois latérales de l'encapsulage, **caractérisé en ce que** pour régler la zone de lecture, on fait varier périodiquement la distance focale de la lentille liquide, la fréquence de variation de la position focale étant significativement plus petite que la fréquence de balayage avec laquelle les rayons lumineux d'émission parcourent la zone de balayage.
